# EUROPÄISCHE PATENTSCHRIFT

(11) **EP 2 156 412 B1**
(45) Veröffentlichungstag und Bekanntmachung des Hinweises auf die Patenterteilung: **02.09.2015**
(21) Anmeldenummer: 08759483.4
(22) Anmeldetag: 09.05.2008
(51) Int. Cl.: G01S 5/00, G07B 15/02, G07B 15/06

(54) **PERSONALISIERUNGSVERFAHREN UND -SYSTEM**
PERSONALIZATION METHOD AND SYSTEM
PROCÉDÉ ET SYSTÈME DE PERSONNALISATION

(30) Priorität: 11.05.2007 DE 102007022150
(43) Veröffentlichungstag der Anmeldung: 24.02.2010
(73) Patentinhaber: Giesecke & Devrient GmbH, 81677 München (DE)
(72) Erfinder: SPITZ, Stephan, 81247 München (DE)
(86) Internationale Anmeldenummer: PCT/EP2008/055745
(87) Internationale Veröffentlichungsnummer: WO 2008/138884

(56) Entgegenhaltungen:
- WO-A-97/26624
- WO-A-2005/106523
- FR-A- 2 776 391
- GB-A- 2 383 216
- US-A1- 2005 064 877
- US-A1- 2006 009 235

## Beschreibung

Die Erfindung betrifft ein Verfahren zum Personalisieren eines Standorts in stationäre, kontaktlose Standortgeber sowie ein entsprechendes System.

Um Ein- und Ausstiegspunkte von Fahrten mit einem öffentlichen Transportmittel zu erfassen, werden stationäre, an den Ein- und Ausstiegspunkten angeordnete, kontaktlose Standortgeber verwendet. Der Benutzer kann die jeweilige Standortinformation mit Hilfe eines mobilen Endgerätes aus den Stationsgebern kontaktlos auslesen. Solche Systeme mit stationären, kontaktlosen Standortgebern, mobilen Endgeräten und einem zentralen Hintergrundsystem sind beispielsweise bekannt aus WO 2006/ 074738 A1 oder WO 2006/016323 A1.

Im Rahmen der Produktion der Standortgeber speichert der Hersteller diverse allgemeine und individuelle Daten auf die Standortgeber. Das Speichern individueller Daten wird allgemein auch als Personalisierung bezeichnet. Zu den für Standortgeber (oder eine kleine Gruppe von Standortgebern) individuellen, zu speichernden Daten gehören unter anderem die Standorte der Standortgeber. Es gibt bereits ausgefeilte Systeme zur Steuerung der Produktion einschließlich der Personalisierung selbst für Bestellungen mit kleinsten Stückzahlen.

GB 2383216 A1 zeigt ein mobiles Endgerät, welches seine Position bestimmt und kontaktlos an ein weiteres Gerät übermittelt. Gemäß FR 2776391 gibt ein Benutzer einen Ländercode in ein mobiles Gerät ein, welches basierend auf dem Ländercode, zentral erzeugte Daten kontaktlos in Funknotrufsäulen einschreibt.

US 2006/992935 A1 und WO 2005/.106523 A1 betreffen komplexe, dynamische Ortsbestimmungssysteme für Mobilfunkgeräte in Mobilfunksystemen.

In US 2006/ 992935 A1 wird vorgeschlagen, die Daten für die Basisstationen des Mobilfunksystems in der zentralen Ortsbestimmungsinstanz durch positionsbezogene Messwerte zu verbessern, die ein Mobilfunkgerät ermittelt. WO 2005/106523 A1 zeigt die Merkmale des Oberbegriffes von Anspruch 1.

Es ist die Aufgabe der vorliegenden Erfindung die Produktionsabläufe für Standortgeber zu verbessern.

Diese Aufgabe wird gelöst durch ein Verfahren bzw. ein System gemäß den unabhängigen Ansprüchen. Die abhängigen Ansprüche sind auf bevorzugte Ausgestaltungen der Erfindung gerichtet.

Es ist ein erster Aspekt der Erfindung, die Standortinformation mit Hilfe eines mobilen Endgerätes erst nachträglich auf den Standortgeber zu speichern. Es ist ein zweiter Aspekt der Erfindung, weitere individuelle Daten, wie beispielsweise ein Zertifikat für den Standortgeber, erst nachträglich auf den Standortgeber zu speichern.

Bevorzugte Ausgestaltungen der Erfindung werden im Folgenden zunächst mit Bezug auf die Figur genauer beschrieben, welche zeigt:

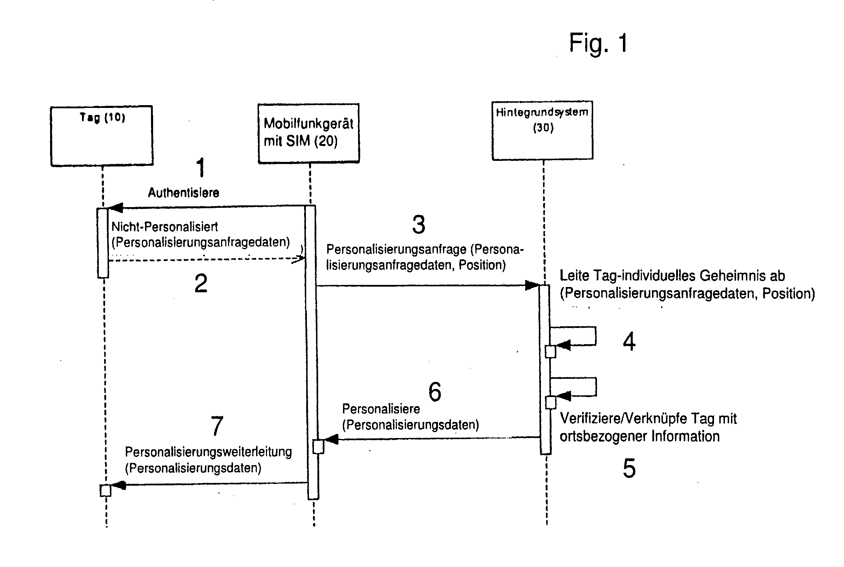

Fig.1 ein Nachrichtenflussdiagramm zum nachträglichen Speichern des Standorts eines Standortgebers mit Hilfe eines mobilen Endgerätes und eines Hintergrundsystems.

Die Figur zeigt ein System umfassend einen stationären, kontaktlosen Standortgeber 10, ein mobiles Endgerät 20 sowie ein Hintergrundsystem 30.

Der Standortgeber 10 umfasst, wie ein herkömmlicher kontaktloser Datenträger, eine Verarbeitungseinheit CPU, einen ersten nicht-flüchtigen Speicher ROM, einen zweiten, wieder beschreibbaren, nicht-flüchtigen Speicher FLASH oder EEPROM, einen Arbeitsspeicher RAM sowie eine Antenne für den kontaktlosen Datenaustausch.

Auf den stationären Standortgeber 10 werden beim Hersteller erste Produktionsdaten gespeichert. Vorzugsweise sind die ersten Produktionsdaten solche Daten, die für alle Standortgeber gleich sind. Die ersten Produktionsdaten können bereits erste individuelle Daten umfassen. Der hergestellte Standortgeber wird - beispielsweise an den Systembetreiber - ausgeliefert und an einem Ort befestigt, so dass er in dem System als stationärer Standortgeber dienen kann. Für eine entsprechende Verwendung als Standortgeber fehlen ihm jedoch noch individuelle Daten, insbesondere eine Standortinformation sowie optional auch ein Zertifikat für den Standortgeber. Als Zertifikat ist in diesem Zusammenhang eine für Dritte verifizierbare Bestätigung zumindest für die Identität und/ oder den Standort des Standortgebers zu sehen.

Das mobile Endgerät 20 wird in der Regel ein Mobilfunkgerät sein, welches vorzugsweise ein Sicherheitsmodul aufweist. In dem Sicherheitsmodul kann unter anderem eine Fahrscheinanwendung zum Abrechnen von Fahrten in dem öffentlichen Verkehrssystem gespeichert sein, welche die stationären Standortgeber als Komponenten im System verwendet, die (gesichert) ihre Standortinformationen bereitstellen.

Zur nachträglichen Personalisierung der Standortgeber weist das Mobilfunkgerät 20 Steuerungsmittel auf, die beispielsweise in der Form eines Midlets auf dem Endgerät, als Anwendung oder als Teil einer Anwendung auf dem Sicherheitselement ausgebildet sein können.

Das Hintergrundsystem 30 umfasst ein herkömmliches Mobilfunksystem sowie einen Server zum Bereitstellen angefragter Personalisierungsdaten. Optional kann eine Zertifizierungsinstanz mit dem Server verbunden oder in dem Server angeordnet sein, welche Zertifikate für stationäre Standortgeber bereitstellt.

In dem in der Figur dargestellten Nachrichtenflussdiagramm antwortet der Standortgeber 10 auf ein Authentisierungskommando 1 des Endgerätes 20 mit der Meldung 2, dass er noch nicht oder noch nicht vollständig personalisiert ist. Im einfachsten Fall gibt der Standortgeber 10 einen entsprechend vorbestimmten Fehlercode als Antwort aus.

Die in Fig.1 gezeigte Antwort 2 enthält den öffentlichen Schlüssel eines asymmetrischen Schlüsselpaares des Standortgebers sowie optional einen zu verifizierenden oder zu aktualisierenden Standort. Eine Identitätsnummer des Standortgebers 10 kann im Nachrichtenaustausch zwischen Standortgeber 10 und Endgerät 20 zuvor ausgetauscht werden oder sollte gegebenenfalls zusammen mit der Antwort 2 übertragen werden.

Die in dem Verfahren auszutauschenden Daten, wie beispielsweise Personalisierungsanfragedaten oder die später erläuterten Personalisierungsdaten können in dem System integritätsgesichert und/ oder verschlüsselt sein. Zu diesem Zweck speichert der Standortgeber einen Autorisierungsschlüssel, welcher ihn gegenüber dem System zumindest zum Erhalt der Personalisierungsdaten authentisiert. Vorzugsweise wird ein individueller symmetrischer Schlüssel verwendet, der aus einem Master-Schlüssel abgeleitet ist. Der Master-Schlüssel wird in der Regel im Hintergrundsystem 30 gespeichert. Aus der Identitätsnummer des Standortgebers lässt sich mit Hilfe des Master-Schlüssels der individuelle Schlüssel des Standortgebers bestimmen.

Das Endgerät 20 sendet eine Anfrage 3 für Personalisierungsdaten an das Hintergrundsystem 30. Die Anfrage 3 enthält die Personalisierungsanfragedaten sowie optional eine in dem Endgerät 20 ermittelte Position des Endgeräts. Die Position des Endgeräts kann in dem Endgerät oder dessen Sicherheitsmodul beispielsweise mit Hilfe eines GPS-Systems oder einer GSM-oder UMTS-Funkzellenortung bestimmt werden, in einem Teil des Hintergrundsystems bestimmt und von dort an das mobile Endgerät übertragen werden oder aber erst im Hintergrundsystem 30 bestimmt und der Anfrage des Endgerätes 20 zugeordnet werden.

Die ermittelte Endgeräteposition kann in unterschiedlichen Formaten bzw. Koordinatensystemen vorliegen. Ein Umsetzen der ermittelten Endgerätepositionen in eine für das System geeignete Standortangabe erfolgt vorzugsweise im Hintergrundsystem.

Das Hintergrundsystem 30 erzeugt Daten zur Personalisierung des Standortes des ersten Standortgebers 10 basierend auf der ermittelten Endgeräteposition. Um zu vermeiden, dass für beliebige Identitätsnummern Personalisierungsdaten erzeugt werden, verifiziert das Hintergrundsystem zunächst, ob die Anfrage von Personalisierungsdaten für einen autorisierten Standortgeber erfolgt. Ein individueller symmetrischer Schlüssel des Standortgebers kann mit Hilfe der Identifikationsnummer des Standortgebers aus einem Masterschlüssel berechnet werden. Optional wird die Zuordnung der Identifikationsnummer des Standortgebers zu dem empfangenen öffentlichen Schlüssel des Standortgebers geprüft und ein Zertifikat für diesen öffentlichen Schlüssel erstellt. In einer erweiterten Variante kann das Zertifikat auch den Standort des Standortgebers enthalten. Das Zertifikat als verifizierbare Bestätigung umfasst somit den öffentlichen Schlüssel des Standortgebers (und optional den Standort) sowie eine digitale Unterschrift der Zertifizierungsinstanz über diese Datenelemente. Die erzeugten Personalisierungsdaten umfassen somit zumindest den aus der Endgeräteposition ermittelten Standort des Standortgebers, für den die Anfrage erfolgte. Ein optional in der Anfrage 3 enthaltener zu verifizierender oder zu aktualisierender Standort kann vor der Erzeugung der Personalisierungsdaten mit dem aus der Endgerätposition ermittelten Standort verglichen werden.

Das Hintergrundsystem 30 sendet die Personalisierungsdaten in einer Personalisierungsanweisung 6, wiederum optional in abgesicherter Form, an das Endgerät 20, welches diese Daten an den Standortgeber 10 weiterleitet 7. Der Standortgeber 10 verifiziert, dass der zu speichernde Standort oder das zu speichernde Zertifikat von einer autorisierten Instanz stammen. Beispielsweise kann er die Signatur des Zertifikats prüfen oder die zur Übertragung angehängten Daten zur Verifikation verwenden.

In der bisher beschriebenen Variante werden die Personalisierungsdaten in dem Hintergrundsystem 30 erzeugt. Es ist jedoch ebenfalls denkbar, dass die Personalisierungsdaten 4 teilweise oder vollständig in dem mobilen Endgerät 20 und dabei vorzugsweise in dem Sicherheitsmodul des Endgerätes 20 erzeugt werden. So kann das Sicherheitsmodul beispielsweise eine Personalisierungsanwendung mit Master-Schlüssel zur Ableitung von individuellen Schlüsseln für Standortgeber und einen - vorzugsweise asymmetrischen - Zertifizierungsschlüssel zur Erstellung von Zertifikaten umfassen. Es ist denkbar eine solche Anwendung auf sicherem Wege, wie er hinreichend im Stand der Technik beschrieben ist, auf das mobile Endgerät zu übertragen.

Das Endgerät 20 kann jedoch auch ein mobiles Endgerät eines Mitarbeiters des Systembetreibers sein. So kann der Hersteller der Standortgeber dem Sytembetreiber zusammen mit den Standortgebern geeignete SIM-Karten bereitstellen, welche teilweise oder vollständig die Aufgaben des Hintergrundsystems 30 aus Fig.1 mit übernehmen.

## Patentansprüche

1. Verfahren zum Speichern einer Standortinformation in einem ersten Standortgeber (10)
in einem System umfassend stationäre Standortgeber zum Bereitstellen einer im Standortgeber gespeicherten Standortinformation für ein kontaktloses Auslesen durch mobile Endgeräte und mobile Endgeräte zum kontaktlosen Auslesen und Verwenden der Standortinformation von den Standortgebern, mit den Schritten:
- Ermitteln einer Position;
- Erzeugen (5) von Daten zur Personalisierung eines ersten Standortgebers (10) mit einem Standort basierend auf der ermittelten Position;
- kontaktloses Übertragen (7) der erzeugten Personalisierungsdaten von einem ersten mobilen Endgerät (20) zu dem ersten Standortgeber (10);
- nicht-flüchtiges Speichern des mit den Personalisierungsdaten empfangenen Standortes zumindest als ein Teil der Standortinformation des ersten Standortgebers (10); wobei
der erste stationäre Standortgeber (10) ein kontaktloser Datenträger bzw. Tag ist;
**dadurch gekennzeichnet, dass**:
in dem Schritt des Ermittelns die Position des ersten mobilen Endgerätes (20) in einem Hintergrundsystem (30) oder in dem ersten mobilen Endgerät (20) ermittelt wird, wobei die Personalisierungsdaten die ermittelte Position des ersten mobilen Endgerätes (20) als in dem ersten Standortgeber (10) zu speichernden Standort des ersten Standortgebers (10) enthalten;
die Standortinformation eine verifizierbare Bestätigung für den Standort des ersten Standortgebers (10) enthält und die Personalisierungsdaten zumindest einen Teil der verifizierbaren Bestätigung enthalten.

2. Verfahren nach Anspruch 1, **dadurch gekennzeichnet, dass** der Schritt des Erzeugens (5) in dem ersten Endgerät (20), vorzugsweise in einem Sicherheitsmodul des ersten Endgerätes (20), erfolgt.

3. Verfahren nach einem der Ansprüche 1 bis 2, **dadurch gekennzeichnet, dass** der Schritt des Erzeugens (5) in dem Hintergrundsystem (30) erfolgt.

4. Verfahren nach Anspruch 3, **gekennzeichnet durch**, Senden (3) einer Anforderung für die Personalisierungsdaten von dem ersten Endgerät (20) an das Hintergrundsystem (30).

5. Verfahren nach Anspruch 4, **dadurch gekennzeichnet, dass** die Anforderung die Position des ersten Endgerätes (20) und/ oder die Identifikationsnummer des ersten Standortgebers (10) umfasst.

6. Verfahren nach einem der Ansprüche 1 bis 5, **gekennzeichnet durch**, Melden des Fehlens einer Standortinformation in dem ersten Standortgeber von dem ersten Standortgeber (10) an das erste Endgerät (20).

7. Verfahren nach einem der Ansprüche 1 bis 6, **gekennzeichnet durch**, Melden eines zu verifizierenden Standorts von dem ersten Standortgeber (10) an das erste Endgerät (20).

8. Verfahren nach Anspruch 7, **gekennzeichnet durch**, Übertragen des zu verifizierenden Standorts von dem Standortgeber (10) zu dem mobilen Endgerät (20) und Vergleichen der für das mobile Endgerät (20) bestimmten Position mit dem zu verifizierenden Standort.

9. Verfahren nach Anspruch 7 oder 8, **dadurch gekennzeichnet, dass** der zu verifizierende Standort in der Form einer Standortinformation mit abgelaufener Gültigkeit von dem Standortgeber (10) zu dem mobilen Endgerät (20) übertragen wird.

10. Verfahren nach einem der Ansprüche 1 bis 9, **gekennzeichnet durch**, wiederholtes Bereitstellen des gespeicherten Standorts des ersten Standortgebers (10) für die mobilen Endgeräte des Systems.

11. System umfassend stationäre Standortgeber zum Bereitstellen einer im Standortgeber gespeicherten Standortinformation für ein kontaktloses Auslesen durch mobile Endgeräte und mobile Endgeräte zum kontaktlosen Auslesen und Verwenden der Standortinformation von den Standortgebern, wobei zumindest ein erster Standortgeber und ein erstes Endgerät angepasst sind ein Verfahren nach einem der Ansprüche 1 bis 10 auszuführen.

## Claims

1. A method for storing a location information item in a first location signaler (10) in a system comprising stationary location signalers for making available location information stored in the location signaler for a contactless readout by mobile terminals, and mobile terminals for the contactless readout and utilization of the location information of the location signalers, having the steps of:
- ascertaining a position;
- producing (5) data for the personalization of a first location signaler (10) with a location based on the ascertained position;
- contactless transmitting (7) of the produced personalization data from a first mobile terminal (20) to the first location signaler (10);
- non-volatile storing of the location received with the personalization data at least as a part of the location information of the first location signaler (10); wherein the first stationary location signaler (10) is a contactless data carrier and/or tag;
**characterized in that**
in the step of ascertaining, the position of the first mobile terminal (20) is ascertained in a background system (30) or in the first mobile terminal (20), wherein the personalization data contain the ascertained position of the first mobile terminal (20) as location of the first location signaler (10) to be stored in the first location signaler (10); the location information contains a verifiable confirmation for the location of the first location signaler (10) and the personalization data contain at least a part of the verifiable confirmation.

2. The method according to claim 1, **characterized in that** the step of producing (5) is effected in the first terminal (20), preferably in a security module of the first terminal (20).

3. The method according to any of the claims 1 to 2, **characterized in that** the step of producing (5) is effected in the background system (30).

4. The method according to claim 3, **characterized by** sending (3) a request for the personalization data from the first terminal (20) to the background system (30).

5. The method according to claim 4, **characterized in that** the request comprises the position of the first terminal (20) and/or the identification number of the first location signaler (10).

6. The method according to any of the claims 1 to 5, **characterized by** reporting the absence of a location information item in the first location signaler by the first location signaler (10) to the first terminal (20).

7. The method according to any of the claims 1 to 6, **characterized by** reporting a location to be verified by the first location signaler (10) to the first terminal (20).

8. The method according to claim 7, **characterized by** transmitting the location to be verified by the location signaler (10) to the mobile terminal (20) and comparing of the position ascertained for the mobile terminal (20) with the location to be verified.

9. The method according to claim 7 or 8, **characterized in that** the location to be verified is transmitted in the form of a location information item with expired validity by the location signaler (10) to the mobile terminal (20).

10. The method according to any of the claims 1 to 9, **characterized by** repeatedly making available the stored location of the first location signaler (10) for the mobile terminals of the system.

11. A system comprising stationary location signalers for making available a location information item stored in the location signaler for a contactless readout by mobile terminals, and mobile terminals for the contactless readout and utilization of the location information of the location signalers, wherein at least one first location signaler and one first terminal are adapted to carry out a method according to any of the claims 1 to 10.

## Revendications

1. Procédé de mémorisation d'une information de position dans un premier indicateur de position (10)
dans un système comprenant des indicateurs de position stationnaires destinés à fournir une information de position mémorisée dans l'indicateur de position à des fins de lecture sans contact par des terminaux mobiles, et des terminaux mobiles destinés à la lecture sans contact et à l'utilisation de l'information de position des indicateurs de position, comportant les étapes:
- détermination d'une position;
- génération (5) de données à des fins de personnalisation d'une premier indicateur de position (10) avec une position sur la base de la position déterminée ;
- transmission sans contact (7) des données de personnalisation générées d'un premier terminal mobile (20) au premier indicateur de position (10);
- mémorisation non volatile de la position reçue avec les données de personnalisation au moins en tant qu'une partie de l'information de position du premier indicateur de position (10);
cependant que
le premier indicateur de position (10) stationnaire est un support de données sans contact ou tag;
**caractérisé en ce que**:
lors de l'étape de la détermination, la position du premier terminal mobile (20) est déterminée dans un système d'arrière-plan (30) ou dans le premier terminal mobile (20), les données de personnalisation contenant la position déterminée du premier terminal mobile (20) en tant que position du premier indicateur de position (10) à mémoriser dans le premier indicateur de position (10);
l'information de position contient une confirmation vérifiable pour la position du premier indicateur de position (10) et les données de personnalisation contiennent au moins une partie de la confirmation vérifiable.

2. Procédé selon la revendication 1, **caractérisé en ce que** l'étape de la génération (5) a lieu dans le premier terminal (20), de préférence dans un module de sécurité du premier terminal (20).

3. Procédé selon une des revendications de 1 à 2, **caractérisé en ce que** l'étape de la génération (5) a lieu dans le système d'arrière-plan (30).

4. Procédé selon la revendication 3, **caractérisé par** l'envoi (3) d'une demande pour les données de personnalisation du premier terminal (20) au système d'arrière-plan (30).

5. Procédé selon la revendication 4, **caractérisé en ce que** la demande comprend la position du premier terminal (20) et/ou le numéro d'identification du premier indicateur de position (10).

6. Procédé selon une des revendications de 1 à 5, **caractérisé par** le signalement de l'absence d'une information de position dans le premier indicateur de position du premier indicateur de position (10) au terminal (20).

7. Procédé selon une des revendications de 1 à 6, **caractérisé par** le signalement de l'absence d'une position à vérifier du premier indicateur de position (10) au terminal (20).

8. Procédé selon la revendication 7, **caractérisé par** la transmission de la position à vérifier de l'indicateur de position (10) au terminal mobile (20) et la comparaison de la position déterminée pour le terminal mobile (20) avec la position à vérifier.

9. Procédé selon la revendication 7 ou 8, **caractérisé en ce que** la position à vérifier est transmise sous forme d'une information standard à validité périmée de l'indicateur de position (10) au terminal mobile (20).

10. Procédé selon une des revendications de 1 à 9, **caractérisé par** la mise à disposition réitérée de la position mémorisée du premier indicateur de position (10) pour les terminaux mobiles du système.

11. Système comprenant des indicateurs de position stationnaires à des fins de mise à disposition d'une information de position mémorisée dans l'indicateur de position à des fins de lecture sans contact par des terminaux mobiles, et des terminaux mobiles destinés à la lecture sans contact et à l'utilisation de l'information de position des indicateurs de position, au moins un premier indicateur de position et un premier terminal étant adaptés à exécuter un procédé selon une des revendications de 1 à 10.
